# EUROPEAN PATENT APPLICATION

(11) **EP 4 730 519 A1**
(43) Date of publication of application: **22.04.2026**
(21) Application number: 25199031.3
(22) Date of filing: 29.08.2025
(51) Int. Cl.: H01M 50/227, B60H 1/00, B60K 1/04, H01M 50/233, H01M 50/296

(54) **STRIP BATTERY SYSTEM**

(30) Priority: 30.08.2024 US 202418821430
(71) Applicant: Thermo King LLC, Minneapolis, MN 55420 (US)
(72) Inventor: STROUD, Adam, Minneapolis, Minnesota, 55420 (US); LOPEZ, Noah, Minneapolis, Minnesota, 55420 (US); JAMESON, Richard L, Minneapolis, Minnesota, 55420 (US); PINKHAM, Zubin, Minneapolis, Minnesota, 55420 (US); MADINENI, Vikram, Minneapolis, Minnesota, 55420 (US)
(74) Representative: Haseltine Lake Kempner LLP

(57) **Abstract**

Strip shape battery modules (200) are provided that can be positioned between cross beams (302) of a trailer (300), a cargo compartment (412) of a truck, etc. The strip shape battery modules can be connected so as to provide suitable power to a transport climate control system (800). The strip shape battery modules can be positioned at a ground clearance of 700 millimeters or more. The strip shape battery modules can be secured using skid plates (310) covering connections and locking the modules in place.

## Description

### Field

This disclosure is directed to battery systems for transport vehicles, particularly batteries having a strip shape configured to fit between or across cross-beams of a truck, trailer, or other transport unit.

### Background

Emissions and other requirements are leading to electrification of transport climate control systems. Large format batteries suitable for sustaining power to transport climate control systems can be large and difficult to integrate into trucks, trailers, or other transport units. Further, batteries provided below a certain height on vehicles can be subject to high standards for durability and crash resistance, thus increasing the weight of such batteries relative to the power and energy such batteries are able to store and supply.

### Summary

This disclosure is directed to battery systems for transport vehicles, particularly batteries having a strip shape configured to fit between cross beams of a truck, trailer, or other transport unit.

Batteries can be provided as strip-shaped modules configured to be positioned between cross-beams of a trailer or cargo compartment of a truck. By providing a plurality of such modules, batteries can be provided meeting the power and energy requirements for a transport refrigeration system while allowing the batteries to be securely positioned between cross beams used in the construction of the trailer or cargo compartment. The positioning between the cross beams can place the batteries at a height where there is less risk of damage in crashes, from road debris, or the like, thereby allowing for lighter construction of the modules and improving power to weight ratios for the batteries. The modules can be removed to allow customization of overall battery size and configuration. The modules can include protection for the electrical connections and to provide security for the battery modules. The modular nature of the batteries including a plurality of strip shaped modules can increase the serviceability of the battery by allowing replacement of only specific modules. The modular nature of such batteries can also reduce the incidence of system-wide failures resulting from a single point fault within the battery system. Additionally, such modules can use lower-cost components in some places due to the use of lower current within individual modules, for example allowing transistors or solid-state relays to be used instead of contactors. Modules can be positioned adjacent, or spaced, for example to account for other accessories for trailers or trucks such as lift gates, fuel tanks, or the like.

In an embodiment, a battery module includes a housing, a positive terminal, a negative terminal, and a plurality of cell modules. The battery module further includes a data connection. The positive terminal, the negative terminal, and the data connection are all provided on a same side of the housing; and a width of the housing is 30 cm (12 inches, which is approximately 30 cm) or less.

In an embodiment, at least 60% of a volume of the housing is formed of a polymer material.

In an embodiment, a width of the housing is 25 cm (10 inches, which is approximately 25 cm) or less

In an embodiment, each of the plurality of cell modules includes a cell battery management system connected to the data connection of the battery module.

In an embodiment, the positive terminal includes at least one of a solid state relay, a transistor, or a contactor and the negative terminal includes at least one of a solid state relay, a transistor, or a contactor.

In an embodiment, a transport climate control system includes an electrically powered compressor, a condenser, an expander, an evaporator, one or more fans, and a plurality of battery modules. Each of the plurality of battery modules includes a housing, a positive terminal, a negative terminal, and a plurality of cell module. The battery module further includes a data connection. The positive terminal, the negative terminal, and the data connection are all provided on a same side of the housing; and a width of the housing is 30 cm (12 inches, which is approximately 30 cm) or less.

In an embodiment, the plurality of battery modules are configured to provide a voltage to operate at least the electrically powered compressor. In an embodiment, the electrically powered compressor includes a variable frequency drive. In an embodiment, the voltage provided by the plurality of battery modules is up to 420 volts.

In an embodiment, the transport climate control system further includes a controller, the controller connected to each of the plurality of battery modules by the respective data connection of said battery module. In an embodiment, the respective data connections of the plurality of battery modules are daisy chained to one another.

In an embodiment, a transport vehicle includes a cargo compartment, an electrically powered transport climate control system configured to affect a temperature of the cargo compartment, and a plurality of battery modules. Each of the plurality of battery modules includes a housing, a positive terminal, a negative terminal, and a plurality of cell module. The battery module further includes a data connection. The positive terminal, the negative terminal, and the data connection are all provided on a same side of the housing; and a width of the housing is 30 cm (12 inches, which is approximately 30 cm) or less.

In an embodiment, the transport vehicle is a trailer. In an embodiment, the trailer includes a plurality of cross-beams and each of the plurality battery modules is disposed between a pair of adjacent cross-beams of the plurality of cross-beams. In an embodiment, each of the one or more battery modules is positioned at least 700 millimeters above ground. In an embodiment, the transport vehicle further includes at least one skid plate configured to retain at least one of the plurality of battery modules between respective adjacent cross-beams of the plurality of cross-beams.

In an embodiment, transport vehicle is a truck.

In an embodiment, the transport vehicle further includes a rack located beneath a cargo compartment of the truck, wherein at some of the plurality of battery modules are attached to the rack.

In an embodiment, the transport vehicle further includes a rack located on a wall of a cargo compartment, wherein at least some of the plurality of battery modules are attached to the rack.

In an embodiment, the plurality of battery modules are configured to provide a voltage to operate the electrically powered transport climate control system.

### Drawings

Fig. 1A illustrates a perspective view of a climate controlled transport unit with a transport climate control system attached to a tractor, according to one embodiment.
Fig. 1B illustrates a side view of a truck with a transport climate control system, according to one embodiment.
Fig. 2A illustrates a strip battery module according to an embodiment.
Fig. 2B illustrates an exploded view of the strip battery module according to Fig. 2A.
Fig. 2C illustrates an exploded view of a cell module according to an embodiment.
Fig. 3A illustrates battery modules installed into a trailer according to an embodiment.
Fig. 3B illustrates battery modules secured to a trailer according to an embodiment.
Fig. 4 illustrates battery modules installed into a truck according to an embodiment.
Fig. 5 illustrates battery modules installed on a frame according to an embodiment.
Fig. 6A illustrates a schematic of a battery module according to an embodiment.
Fig. 6B illustrates an architecture of a battery system according to an embodiment.
Fig. 6C illustrates an architecture of a battery system according to an embodiment.
Fig. 7A illustrates a schematic of a battery module according to an embodiment.
Fig. 7B illustrates an architecture of a battery system according to an embodiment.
Fig. 7C illustrates an architecture of a battery system according to an embodiment.
Fig. 8 illustrates a schematic of a transport climate control system according to an embodiment.

### Detailed Description

This disclosure is directed to battery systems for transport vehicles, particularly batteries having a strip shape configured to fit between cross-beams of a truck, trailer, or other transport unit.

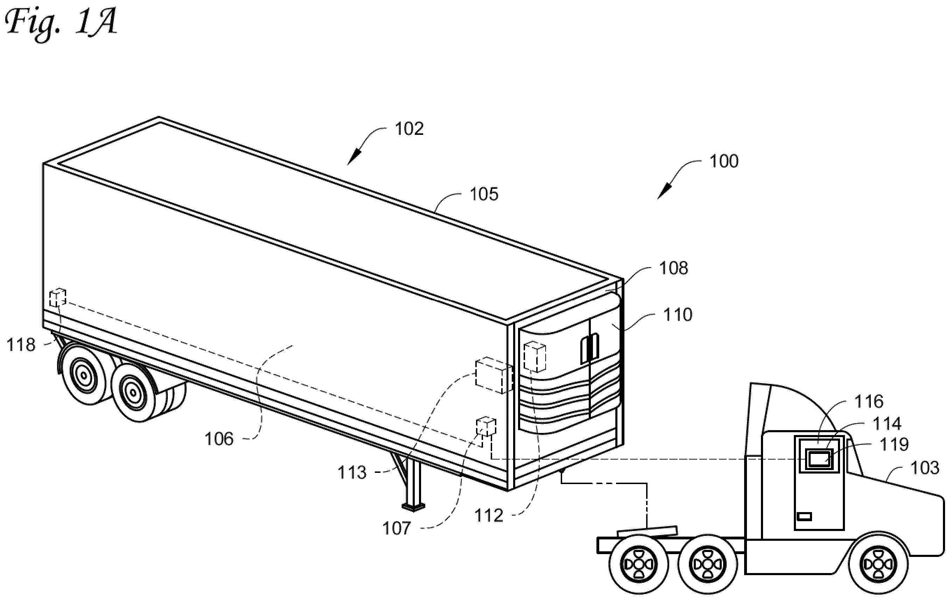

Fig. 1A illustrates one embodiment of a climate controlled transport unit 102 attached to a tractor 103. The climate controlled transport unit 102 includes a transport climate control system 100 for a transport unit 105. The tractor 103 is attached to and is configured to tow the transport unit 105. The transport unit 105 shown in Fig. 1A is a trailer. It will be appreciated that the embodiments described herein are not limited to tractor and trailer units, but can apply to any type of transport unit (e.g., a truck, a container (such as a container on a flat car, an intermodal container, a marine container, etc.), a box car, a semi-tractor, a bus, or other similar transport unit), etc.

The transport climate control system 100 includes a climate control unit (CCU) 110 that provides environmental control (e.g. temperature, humidity, air quality, etc.) within a climate controlled space 106 of the transport unit 105. The transport climate control system 100 also includes a programmable climate controller 107 and one or more sensors (not shown) that are configured to measure one or more parameters of the transport climate control system 100 (e.g., an ambient temperature outside of the transport unit 105, a space temperature within the climate controlled space 106, an ambient humidity outside of the transport unit 105, a space humidity within the climate controlled space 106, etc.) and communicate parameter data to the climate controller 107.

The CCU 110 is disposed on a front wall 108 of the transport unit 105. In other embodiments, it will be appreciated that the CCU 110 can be disposed, for example, on a rooftop or another wall of the transport unit 105. The CCU 110 includes a transport climate control circuit that connects, for example, a compressor, a condenser, an evaporator and an expansion valve to provide conditioned air within the climate controlled space 106. The CCU 110 can be an electrically powered CCU drawing power from one or more battery modules (not shown) that are disposed between cross-beams of the transport unit 105.

The climate controller 107 may comprise a single integrated control unit 112 or may comprise a distributed network of climate controller elements 112, 113. The number of distributed control elements in a given network can depend upon the particular application of the principles described herein. The climate controller 107 can optionally also receive power from the one or more battery modules.

A human-machine interface (HMI) 114 may be included in a cabin 116 of tractor 103. The HMI may include a display 119. HMI 114 includes a user input, for example a touch-screen, keypad, keyboard, track pad or ball, mouse, microphone configured to receive voice commands, or the like. In an embodiment, the HMI 114 is a mobile device such as a smart phone including an application configured to accept input of the parameters. In an embodiment, the HMI 114 is an in-dashboard navigation system.

The HMI 114 is operatively connected to the climate controller 107. The operative connection may be wired or wireless communications, for example according to a controller area network (CAN) bus, BLUETOOTH^{™}, 802.11 WiFi, or other such standards and using corresponding hardware. The climate controller 107 is configured to receive the one or more parameters from HMI 114. The climate controller 107 can be configured to receive the energy level of the energy storage source, for example from an energy storage management system connected to the one or more battery modules.

The climate controlled transport unit 102 can include door sensor 118 located at a door (not shown) of the climate controlled space 106 and configured to determine whether the door of climate controlled space 106 is open or closed. Door sensor 118 may be, for example, a mechanical, electrical, or optical sensor. Door sensor 118 may be in communication with the climate controller 107, for example via wired or wireless communications.

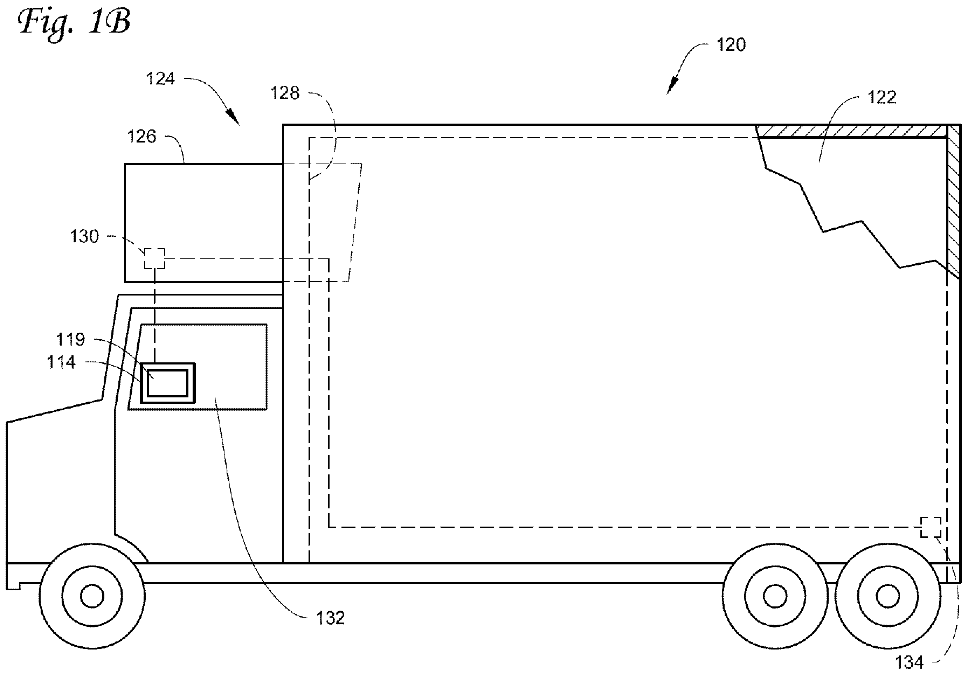

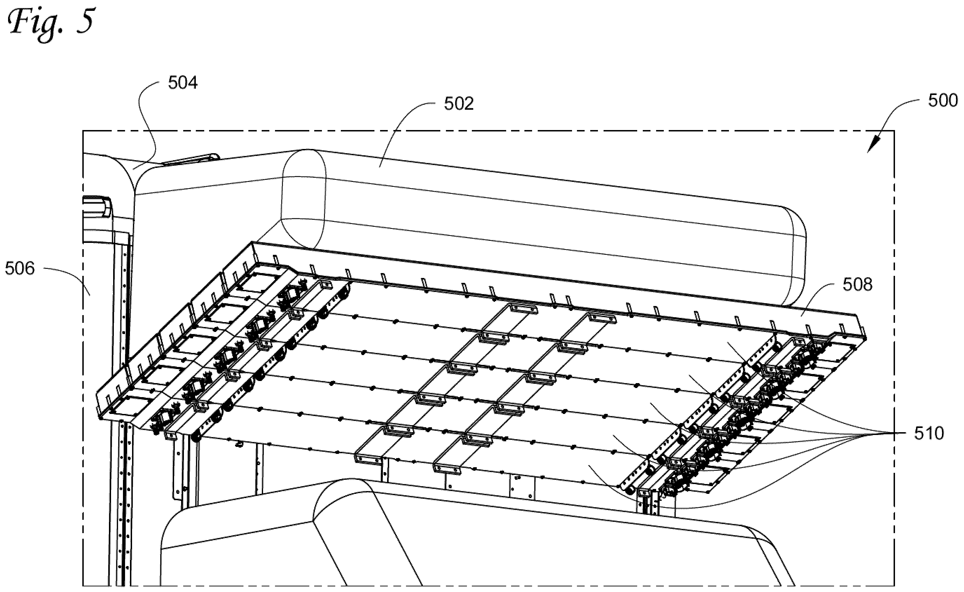

Fig. 1B depicts a temperature-controlled straight truck 120 that includes a climate controlled space 122 for carrying cargo and a transport climate control system 124. The transport climate control system 124 includes a CCU 126 that is mounted to a front wall 128 of the load space 112. The CCU 126 is controlled via a climate controller 130 to provide climate control within the climate controlled space 122. The CCU 126 can include, amongst other components, a transport climate control circuit that connects, for example, a compressor, a condenser, an evaporator and an expansion valve to provide climate control within the climate controlled space 122. The CCU 126 can be an electrically powered climate control system. CCU 126 can be powered by one or more battery modules (not shown). The battery modules can be positioned between cross-beams of the straight truck 120 below the climate controlled space 122. In an embodiment, the battery modules can be provided on a frame or other suitable support, for example as discussed below and shown in Figure 5.

The transport climate control system 124 also includes a programmable climate controller 130 and one or more sensors (not shown) that are configured to measure one or more parameters of the transport climate control system 124. The climate controller 130 is configured to control operation of the transport climate control system 124 including the transport climate control circuit. The straight truck 120 includes an HMI 114 as described above with respect to Fig. 1A, that is located in the cabin 132 and operatively connected to the climate controller 130.

The straight truck 120 can include a door sensor 134 located at a door (not shown) of the climate controlled space 122 and configured to determine whether the door (not shown) of climate controlled space 122 is open or closed. Door sensor 134 may be, for example, a mechanical, electrical, or optical sensor. Door sensor 134 is in communication with the climate controller 130, for example via a wired or wireless communication.

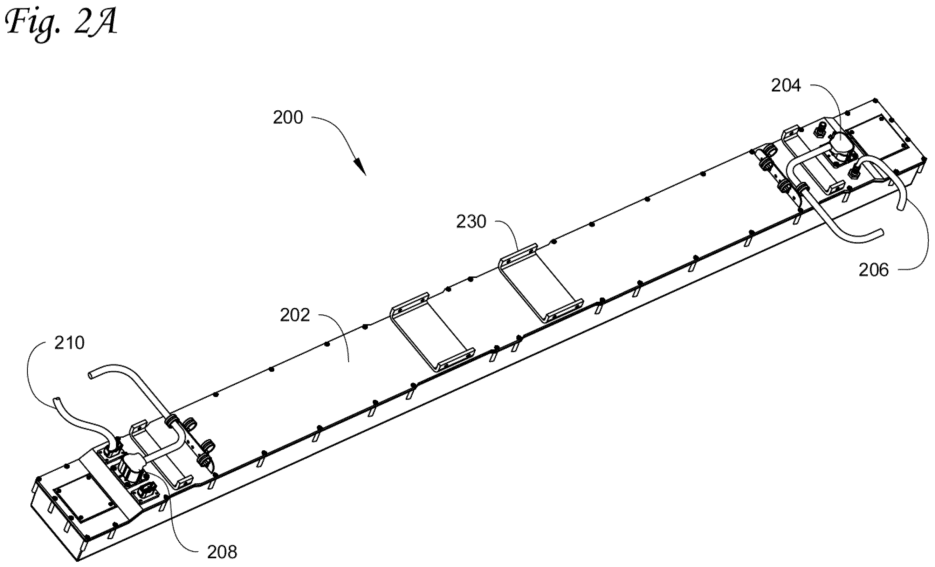

Fig. 2A illustrates a strip battery module according to an embodiment. Battery module 200 includes housing 202, positive terminal 204, temperature control fluid connection 206, negative terminal 208, and data connection 210.

Housing 202 defines an exterior of the battery. In an embodiment, at least part of housing 202 can be made of a lightweight material having a weight that is relatively less than a metal housing of the same dimensions as housing 202. As a non-limiting example, housing 202 can be made of a polymer or a composite including a polymer. In an embodiment, the housing 202 can include a composite polymer material including reinforcing fibers in a suitable polymer matrix. In an embodiment, the housing 202 can include fillers, coatings, and materials for shielding from electromagnetic interference. This can include, for example, non-woven veils layered between reinforcing fibers to shield from electromagnetic interference. In an embodiment, housing 202 or components thereof can be formed through compression molding, injection molding, or the like. Housing 202 can be configured to be mounted such that it is at least 700 mm above the ground when installed into the vehicle, and thereby may not be subject to some standards such as battery crush test standards. Housing 202 can be configured to be mounted between cross-beams of a trailer or a truck cargo compartment. For example, housing 202 can have a width of 36 cm (fourteen inches, which is approximately 36cm) or less. In an embodiment, housing 202 has a width of 30cm (twelve inches, which is approximately 30cm) or less. In an embodiment, housing 202 has a width of 25cm (ten inches, which is approximately 25cm) or less. In an embodiment, housing 202 has a width of 20 cm (eight inches, which is approximately 20cm) or less. Housing 202 can include one or more attachment features 230 configured to allow attachment of battery module 200 to a vehicle, frame, rack, or other suitable support, for example by providing openings configured to receive a bolt or other mechanical fastener.

Positive terminal 204 is provided on battery module 200 such that the positive terminal 204 can be accessed when battery module 200 is installed into a vehicle. Positive terminal 204 allows an electrical connection to be made between the battery module 200 and other electrical components such as other battery modules, loads, and the like. Battery modules 200 used together can be daisy-chained.

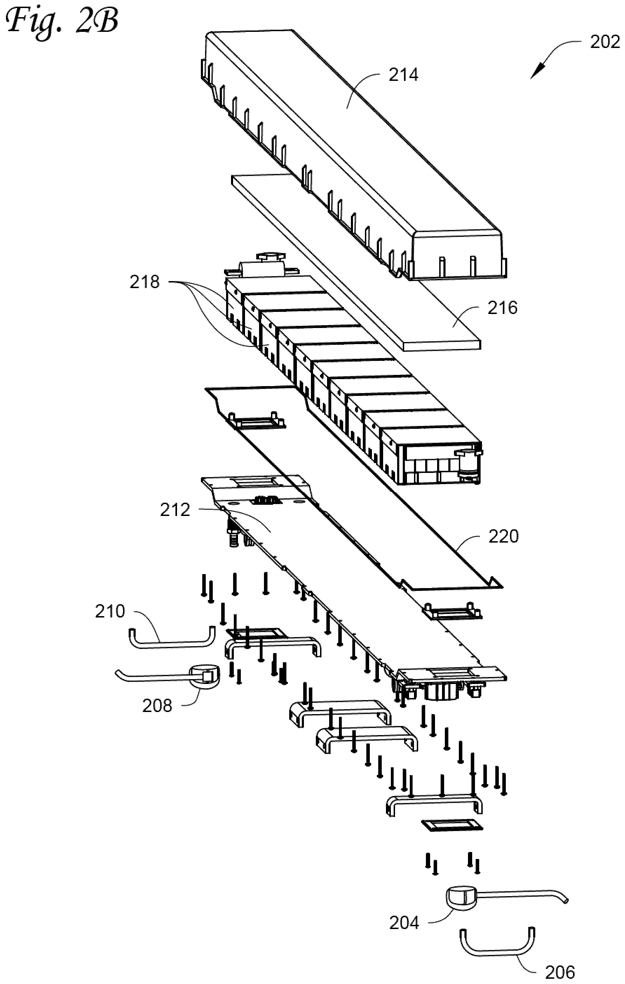

Temperature control fluid connection 206 is a port, opening, tube, or the like configured to receive a battery temperature control fluid. The battery temperature control fluid can be any suitable temperature control fluid for heating or cooling the battery, such as liquid or gaseous temperature control fluids. Temperature control fluid connection 206 can be configured to direct the received battery temperature control fluid to a temperature control feature located within the battery module 200, such as temperature control plate 216 described below and shown in Fig. 2B. Battery modules 200 used together can have the temperature control fluid connections 206 daisy-chained to one another.

Negative terminal 208 is provided on battery module 200 such that the negative terminal 208 can be accessed when battery module 200 is installed into a vehicle. Negative terminal 208 allows an electrical connection to be made between the battery module 200 and other electrical components such as other battery modules, loads, and the like.

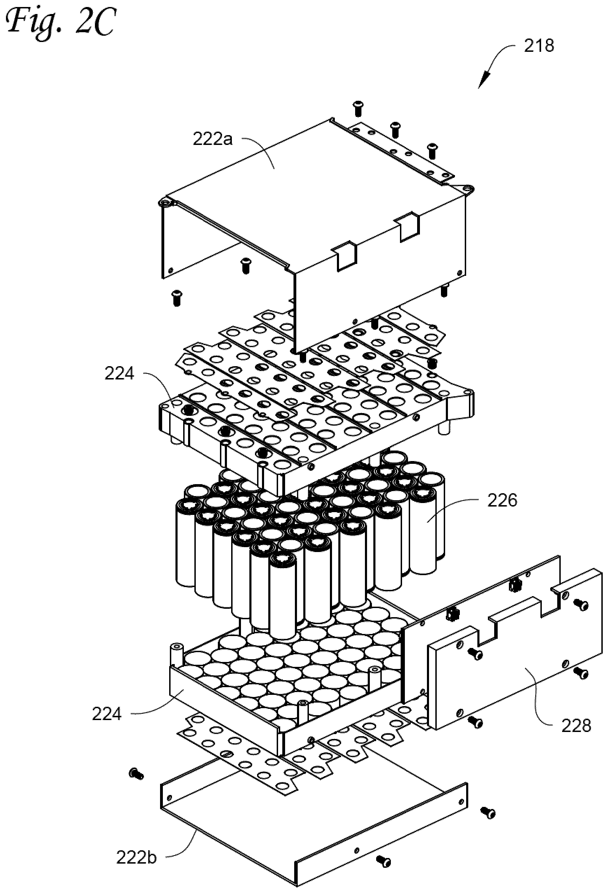

Data connection 210 is a connection allowing for wired communications of data with controllers included in the battery module 200, such as a cell monitor battery management systems (BMS) of individual cell modules, such as the BMS 228 as described below and shown in Fig. 2C, a controller of the battery module 200, or the like.

Fig. 2B illustrates an exploded view of the strip battery module according to Fig. 2A. In the exploded view of Fig. 2B, the housing 202 is opened by separation of baseplate 212 and lightweight enclosure 214. As can be seen in the exploded view of Fig. 2B, battery module 200 further includes temperature control plate 216, a plurality of cell modules 218, and a gasket 220.

Baseplate 212 is configured to combine with lightweight enclosure 214 to form the housing 202 as discussed above and shown in Fig. 2A. In an embodiment, baseplate 212 can be an outward-facing part of housing 202 when the battery module 200 is installed between cross-beams of a trailer or a cargo compartment of a truck, or when the battery module 200 is provided on a rack or frame. Baseplate 212 can include suitable features to be presented on an exterior of the battery module 200, such as the positive and negative terminals 204, 208, temperature control connection 206, and/or data connection 210 as discussed above and shown in Fig. 2A. The baseplate 212 and lightweight enclosure 214 can combine to define an internal space of the battery module. Lightweight enclosure 214 can be formed of a lightweight material as discussed above for housing 202, such as a polymer material. Lightweight enclosure 214 can be sized so as to fit between cross-beams of a trailer or a cargo compartment of a truck.

Temperature control plate 216 is configured to provide heating or cooling to cell modules 218, for example during operations of the battery module 200, charging of the battery module 200, or any other suitable situation where the battery module 200 may require heating or cooling. Temperature control plate 216 can be configured to receive a battery temperature control fluid from the temperature control connection 206 and exchange heat between the battery temperature control fluid and the cell modules 218.

Cell modules 218 are smaller groupings of individual battery cells along with a battery management system (BMS) 228 as described below and shown in Fig. 2C arrayed within lightweight enclosure 214 so as to provide the electrical power supplied by the battery module 200. Cell modules 218 are sized so as to fit within the lightweight enclosure 214. Cell modules 218 can be provided in any suitable number, for example to provide desired current, voltage, and/or energy values for the battery module 200. The cell modules 218 can be connected to one another in parallel, in series, or in any suitable combination of parallel and series connections to achieve the desired current and/or voltage values for the battery module 200.

Fig. 2C illustrates an exploded view of a cell module according to an embodiment. Fig. 2C shows one of the cell modules 218 that can be included in battery module 200 as shown in Fig. 2B. The cell module 218 can include a sleeve 222 including a top piece 222a and a bottom piece 222b. Sleeve 222 is configured isolate cells 226 from one another so as to avoid external short circuiting. Sleeve 222 can further be configured to house and/or isolate electronics such as sensors, BMS 228, and the like to avoid shorting. In an embodiment, sleeve 222 is formed of aluminum, to facilitate heat transfer from temperature control plate 216. Sleeve 222 can be electrically isolated from the voltages of the cells 226. The cell module 218 can further include a cell carrier 224, a plurality of cells 226, and a cell monitor battery management system (BMS) 228. The cell carrier 224 can include one or more segments. The cell carrier 224 can define a plurality of channels each configured to receive one of the cells 226 of the cell module 218. Cell carrier 224 can be secured using fasteners, for example screws, such that the cell carrier retains the cells 226 is position by compressive force. The cells 226 can be any suitable battery cell for use in the cell module 218, with a non-limiting example of a cell 226 being a 21700 cell. Cells 226 can also be other suitable types or shapes of cells, such as prismatic hardcase cells, pouch cells, or the like.

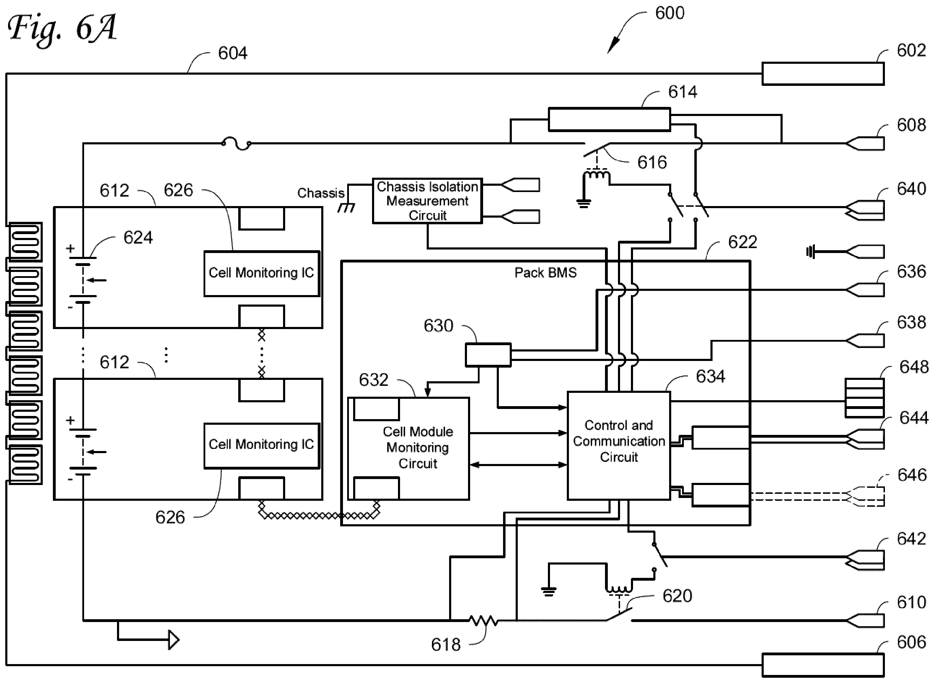

BMS 228 can be a controller provided in cell module 218 to oversee the operation of the cell module 218. BMS 228 can be configured to, for example, determine and/or report the operational state of the cells 226 such as voltage and/or current data, temperature data, and the like for cell 226 or module 218, control the battery to protect the cells 226 and/or optimize the performance thereof, and the like. In an embodiment, the BMS 228 of a cell module 218 can be connected to the BMS of other cell modules of the battery module 200. In an embodiment, the BMS 228 of cell module 218 can be connected to a controller of the battery module 200. In an embodiment, the BMS 228 of cell module 218 can be connected to an external device by way of data connection 210 using, for example, a control and communication circuit (see, for example, control and communication circuit 634 in Fig. 6A). Connections of the BMS 228 to the cell module 218 can be galvanically or optically isolated physical layers from connections among the cell modules 218. BMS 228 can have galvanically or optically isolated physical communication layers configured to allow communication with other BMS 228 of other cell modules using, for example, a control and communication circuit. BMS 228 can be configured to participate in a distributed battery management scheme, for example to provide data to a controller for the scheme and/or to implement commands from the controller.

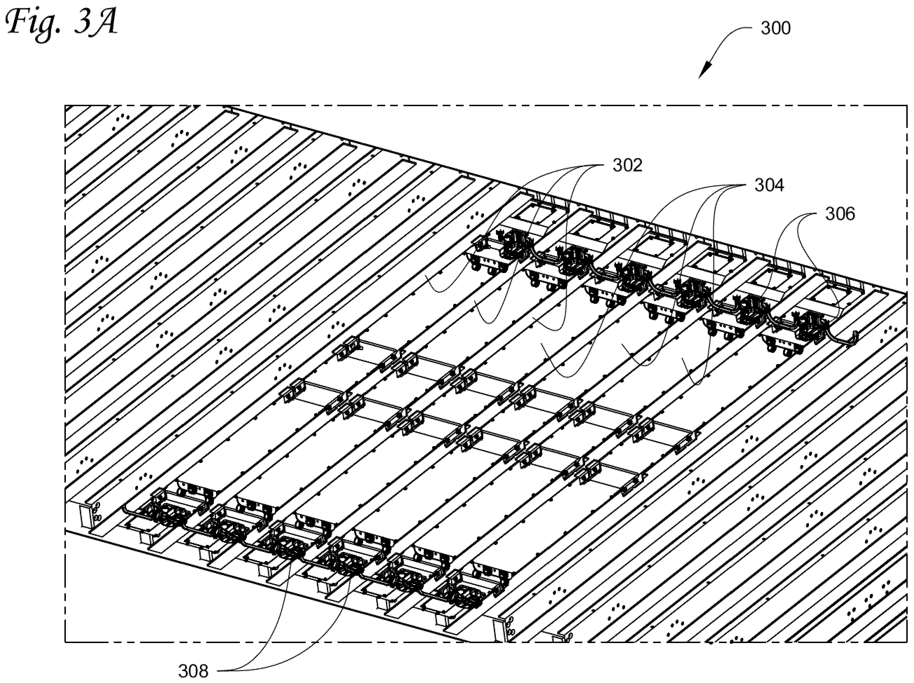

Fig. 3A illustrates battery modules installed into a trailer according to an embodiment. Trailer 300 is viewed from the underside in the view of Fig. 3A. The trailer 300 includes a plurality of cross-beams 302. A plurality of battery modules 304 are attached to the trailer 300. Battery modules 304 can each be positioned between a pair of adjacent cross-beams 302. Battery modules 304 each provide a positive terminal 306 and a negative terminal 308.

Cross-beams 302 are beams provided extending transverse to a longitudinal axis of the trailer (e.g., extending from a road side to a curb side of the trailer). Cross-beams 302 can be any suitable material, such as, for example, steel, aluminum, or the like. Cross-beams 302 can be distributed along a bottom of a cargo compartment of a trailer. The cross-beams 302 and spaces therebetween can be accessible from an underside of the cargo compartment of the trailer. Cross-beams 302 can be distributed with any suitable spacing. In an embodiment, at least some cross-beams 302 are spaced apart from adjacent cross-beams by at or about 36 cm (fourteen inches, which is approximately 36 cm) or less. In an embodiment, at least some cross-beams 302 are spaced apart from adjacent cross-beams by at or about 30 cm (twelve inches, which is approximately 30 cm) or less. In an embodiment, at least some cross-beams 302 are spaced part from adjacent cross-beams by at or about 20 cm (eight inches, which is approximately 20 cm) or more.

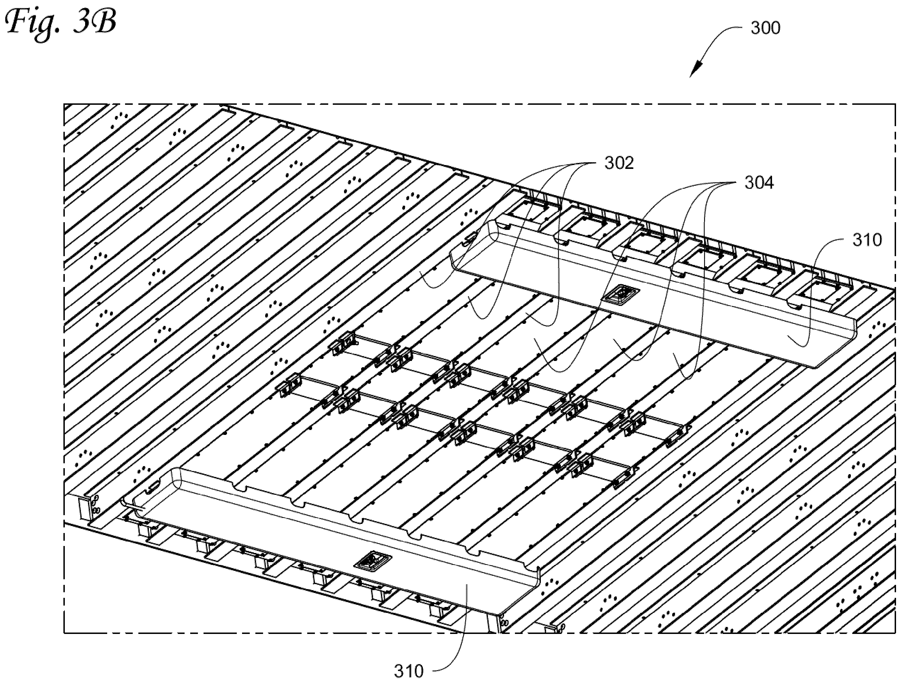

Battery modules 304 are each battery modules configured to fit into a space formed between two adjacent cross-beams 302. A non-limiting example of a battery module 304 usable in trailer 300 is battery module 200 as described above and shown in Figure 2. The battery modules 304 can have any suitable shape capable of fitting between the adjacent cross-beams 302, for example having suitable width based on the distribution of the cross-beams 302. In an embodiment, a height of the battery modules 304 can be such that a body or housing of the battery modules 304 does not extend below bottoms of the cross-beams 302. In an embodiment, positive terminal 306 and/or negative terminal 308 can extend below the bottoms of cross-beams 302. In an embodiment, battery modules 304, when mounted between the cross-beams 302 can have a lowest point that is at least 700 millimeters (mm) above ground. Battery modules 304 can be provided in any suitable number and arrangement of parallel and/or series connections among the positive terminals 306 and negative terminals 308 so as to be capable of powering at least an electrically powered transport climate control unit. Battery modules 304 can be fixed between the cross-beams 302 by any suitable fastener or mechanical connection, such as bolts, corresponding engagement features, or the like. In an embodiment, the fixing of the battery modules 304 can be secured, for example by using locks or any other suitable security features as the connection or to secure the connection. In an embodiment, skid plates 310 as shown in Fig. 3B can be used to obscure the fasteners used to secure battery modules 304 between the cross-beams 302.

Fig. 3B illustrates battery modules secured to a trailer according to an embodiment. In Fig. 3B, skid plates 310 have been provided over each of the respective positive terminals 306 and negative terminals 308 of the battery modules 304. Skid plates 310 can protect features of one or more of the battery modules 304 such as the positive and negative terminals 306, 308 shown in Fig. 3A, temperature control fluid connections, data connections, and the like. Each of skid plates 310 can be configured to extend across at least two adjacent cross-beams 302. Each of skid plates 310 can be configured to extend across at least one battery module. In an embodiment, each skid plate 310 is configured to extend across a plurality of the battery modules 310. In an embodiment, two skid plates 310 can extend over a particular battery module 304, for example such that one skid plate 310 extends over the respective positive terminals 306 of the battery modules 304 and another skid plate 310 extends over the respective negative terminals 308 of the battery modules 304. Skid plates 310 can be attached to battery modules 304 and/or the cross-beams 302 by any suitable fastener or mechanical connection, such as bolts, corresponding engagement features, or the like. In an embodiment, the fixing of the skid plates 310 can be secured, for example by using locks or any other suitable security features as the connection or to secure the connection.

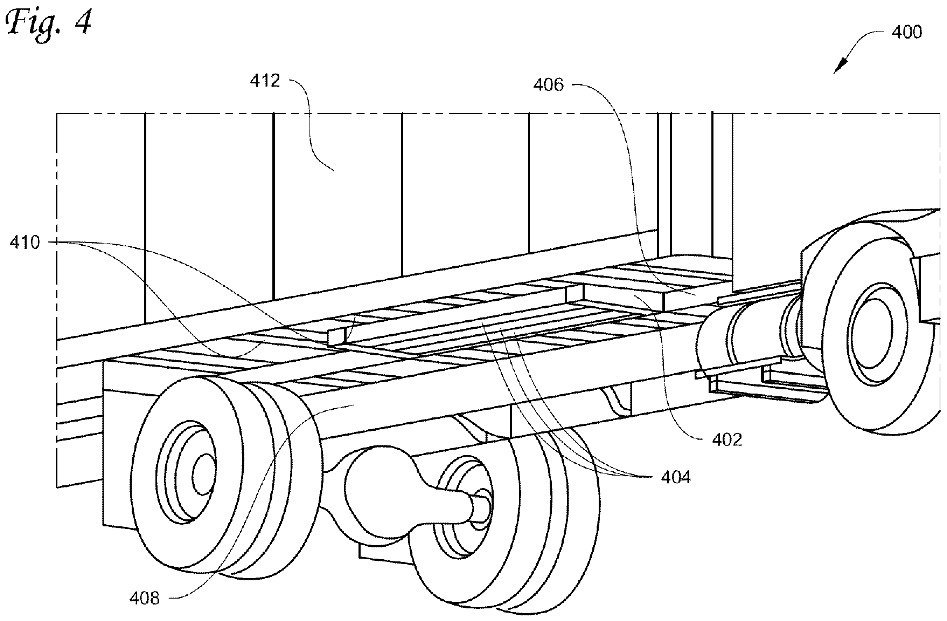

Fig. 4 illustrates battery modules installed into a truck according to an embodiment. Truck 400 includes one or more undermount racks 402 each containing one or more battery modules 404. The undermount racks 402 can be attached to beams 406 and/or chassis 408 of truck 404. Beams 406 can be connected to cross-beams 410, with cross-beams 410 supporting cargo compartment 412. Skid plate 414 can be provided to cover at least portions of the battery modules 404, for example to protect one or more features of one or more of the battery modules 404 including, for example, various connections, fastening points, and the like.

One or more undermount racks 402 can be provided below a cargo compartment of truck 400. The undermount rack 402 can be configured to hold one or more of the battery modules 404. Undermount rack 402 can include one or more attachment features for allowing attachment of battery modules 404, such as openings for receiving fasteners or locks, mechanical interface features, or the like. Undermount rack 402 can be mounted to the truck 400 by any suitable attachment, such as one or more of welds, mechanical fasteners, interfacing mechanical features, or the like. In an embodiment, undermount rack 402 can be configured to hold the battery modules 404 at a height of 700 millimeters or higher when undermount rack and battery modules 404 are installed on the truck 400. In an embodiment, undermount rack 402 can be positioned such that the battery modules 404 are mounted such that the major axes of the battery modules 404 are transverse to the cross-beams 410.

Battery modules 404 can be any suitable battery modules capable of powering a transport climate control system of truck 400 and being configured to fit in one of the undermount racks 402. A non-limiting example of a battery module 404 is the battery module 200 as described above and shown in Fig. 2A-2C. Battery modules 404 can be provided in any suitable number and arrangement of parallel and/or series connections among the respective positive and negative terminals thereof so as to be capable of powering at least an electrically powered transport climate control unit. Battery modules 404 can be fixed to undermount rack 402 by any suitable fastener or mechanical connection, such as bolts, corresponding engagement features, or the like. In an embodiment, the fixing of the battery modules 404 can be secured, for example by using locks or any other suitable security features as the connection or to secure the connection. Alternatively, instead of undermount racks 402, battery modules 404 can be mounted between cross-beams 410 in a truck 400, as described above with respect to trailer 300 and the mounting of battery modules 304 between cross-beams 302 shown in Fig. 3.

Truck 400 includes cargo compartment 412. Cargo compartment 412 can include at least one space where the temperature is controlled by a transport climate control system powered by the battery modules 404. Cargo compartment 412 can be supported by one or more of beams 406, the chassis 408 of the truck 400, or cross-beams 410. The undermount racks can be connected to any one or more of beams 406, chassis 408, and/or the cross-beams 410.

In an embodiment, undermount racks 402 could be applied underneath a trailer such as trailer 300 shown in Fig. 3 and discussed above, and attached to suitable features thereof such as cross-beams 302.

Fig. 5 illustrates battery modules installed on a frame according to an embodiment. Truck 500 includes transport climate control unit 502 on a front wall 504 of the cargo compartment 506. Transport climate control unit 502 is configured to provide climate control to cargo compartment 506. Transport climate control unit 502 can be an electrically powered transport climate control system. Transport climate control unit 502 can be a portion of a transport climate control system, for example including multiple components of the transport climate control system disposed within a housing. A frame 508 is also provided on front wall 504.

Frame 508 supports one or more battery modules 510. Frame 508 can be positioned below the transport climate control unit 502. In an embodiment, at least a portion of frame 508 can extend over a portion of the transport climate control system.

Frame 508 can be configured to allow attachment of one or more battery modules 510. The battery modules 510 can be attached to frame 508. Battery modules 510 can be any suitable battery modules capable of powering transport climate control unit 502 and being configured to be attached to frame 508. A non-limiting example of a battery module 510 is the battery module 200 as described above and shown in Fig. 2A-2C. Battery modules 510 can be provided in any suitable number and arrangement of parallel and/or series connections among the respective positive and negative terminals thereof so as to be capable of powering transport climate control unit 502. Battery modules 510 can be fixed to frame 510 by any suitable fastener or mechanical connection, such as bolts, corresponding engagement features, or the like. In an embodiment, the fixing of the battery modules 510 can be secured, for example by using locks or any other suitable security features as the connection or to secure the connection.

In an embodiment, frame 508 can be used with a trailer such as transport unit 102 described above and shown in Fig. 1 or trailer 300 described above and shown in Fig. 3. In such embodiments, the battery modules 510 can be fixed to the frame 508 as described above, and the frame 508 can be connected to a front wall of the trailer.

Fig. 6A illustrates a schematic of a battery module according to an embodiment. Battery module 600 includes temperature control fluid inlet 602, temperature control fluid channel 604, and temperature control fluid outlet 606. Battery module 600 further includes a positive terminal 608, a negative terminal 610, and a plurality of cell modules 612. The positive terminal 608 can be connected to one of the cell modules 612 by way of a precharge circuit 614 and a contactor or solid state relay 616. At least one of the cell modules 612 can be connected to the negative terminal 610, with the connection including a current sensor 618 and a second contactor 620. The respective contactors or solid state relays 616, 620 can, in an embodiment, each be part of a high voltage interlock loop (HVIL) including, for example, a ground connection, a breaker, or the like. The battery module 600 further includes a battery management system (BMS) 622.

Battery module 600 is a high-voltage battery module, for example a battery module configured to provide approximately 420 V as a voltage for said battery module. Non-limiting examples of voltages provided by a high-voltage battery module such as the battery module 600 can be in a range from 300 V to 800 V. In an embodiment, the voltages provided by a high-voltage battery module such as the battery module 600 can be in a range from 300 V to 420 V. In an embodiment, the battery module is a hazardous voltage battery, having a voltage of 60V or greater. Battery module 600 can be a battery module configured for use in a trailer or truck, such as battery module 200, 304, 404, or 510 as discussed above and respectively shown in Figs. 2A-2C, 3A-3B, 4, and 5. In a non-limiting embodiment, battery module 600 can be configured to store at or about 10 kilowatt-hours (kW*H) to at or about 13 kW*H of energy.

Battery module 600 can include a temperature control fluid circuit including temperature control fluid inlet 602, temperature control fluid channel 604, and temperature control fluid outlet 606. Temperature control fluid inlet 602 is configured to receive a temperature control fluid, such as a fluid, from a suitable temperature control fluid source such as a battery temperature control system circulating said temperature control fluid. The temperature control fluid channel 604 is a channel configured to convey the temperature control fluid through the battery module. At least a portion of the temperature control fluid channel 604 is configured to allow heat exchange such that the temperature control fluid can absorb heat from one or more components of the battery module 600 thereby heating or cooling said components, with non-limiting examples of components including one or more cell modules 612, cells 624, and/or one or more circuits of the BMS 622. The temperature control fluid channel can direct the temperature control fluid to a temperature control fluid outlet 606 where temperature control fluid can exit battery module 600, for example to be returned to the battery temperature control system circulating said temperature control fluid through one or more of battery modules 604.

Cell modules 612 can be any suitable modules such as the cell modules 218 described above and shown in Fig. 2B and 2C. The cell modules 612 can each include cells 624 and a cell monitoring circuit 626. Cells 624 be any suitable battery cell for use in the cell module 612, with a non-limiting example of a cell 624 being a 21700 cell. Cell monitoring circuit 626 can include an integrated circuit configured to measure one or more operational conditions of the battery, such as one or more voltages, currents, temperatures, state of charge, the presence of a fault, or the like. Cell modules 612 can further include any suitable housings, retention features, and the like, such as the features of cell module 218 as described in detail above and shown in Fig. 2C. In an embodiment, the cell modules 612 can be omitted, and cells 624 placed directly into battery module 600 by themselves.

Cell modules 612 can be electrically connected in series and provided in a sufficient number so as to achieve the desired voltage for the battery module 600. For example, when battery module 600 is a 420 V battery module, and each of cell modules 612 is a 42 V cell module, ten cell modules 612 can be provided and connected in series so as to provide the 420 V voltage for the battery module 600. Each cell module can include a respective cell monitoring circuit 626. The cell monitoring circuits 626 can be connected to one another and/or the BMS 622, for example through a daisy-chain connecting the individual cell-monitoring circuits 626 of the various cells modules 612.

BMS 622 is configured to control the battery module 600. BMS 622 can include power circuit 630, cell monitoring circuit 632, and control and communications circuit 634. Power circuit 630 can receive power and distribute power so as to operate the other components of BMS 622. Monitoring circuit 632 can be connected to cell monitoring circuits 628 and/or otherwise be configured to measure, detect, or receive operational characteristics of the battery module 600 such as voltage, current, temperature, state of charge, presence of faults and the like. BMS 622 can include any further suitable additional connections, such as connections to a BMS power supply 636, battery wake 638, circuit portions connected to high voltage interlock loop (HVIL) B+ and HVIL B- 640, 642. The communication circuit 634 can be connected to private and/or public network connections 644, 646 so as to communicate with private and/or public networks for vehicle components such as, as a non-limiting example, a control area network (CAN) bus. In an embodiment, BMS 622 includes an isolation measurement circuit configured to measure, typically at start-up or awakening of the respective battery module 600, the resistance of battery module 600 with respect to the chassis to which the battery module 200 is attached or otherwise corresponds. The isolation measurement circuit can measure resistance from the positive and negative terminals of the battery to the chassis of the battery itself and of the vehicle chassis to which it is bonded.

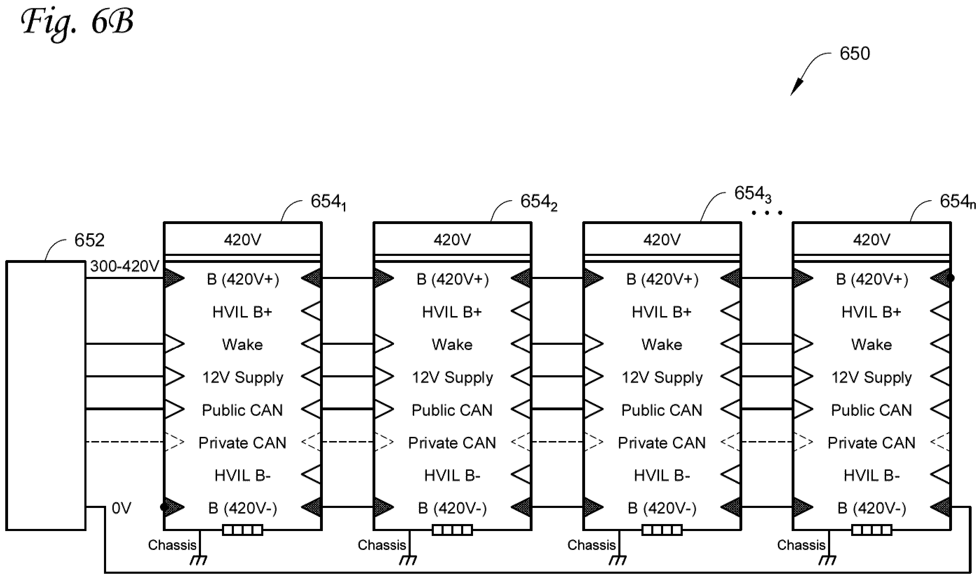

Fig. 6B illustrates an architecture of a battery system according to an embodiment. Battery system 650 includes a load 652 and a plurality of battery modules 654₁₋ₙ configured to supply power to the load 652. Each of the battery modules 654₁₋ₙ can be, as a non-limiting example, a high-voltage battery module such as the battery module 600 as described above and shown in Fig. 6A. The battery modules 654₁₋ₙ are connected to the load such that the positive terminal of a first battery module 654₁ of the plurality is connected to the load 652, a negative terminal of the final battery module 654ₙ of the plurality is connected to the load, and otherwise the battery modules 654₁₋ₙ are connected in parallel with one another. All other connections of the battery modules 654₁₋ₙ such as battery wake, BMS power supply, public data connections, and/or private data connections can be, for example, daisy chained across battery modules 654₁₋ₙ.

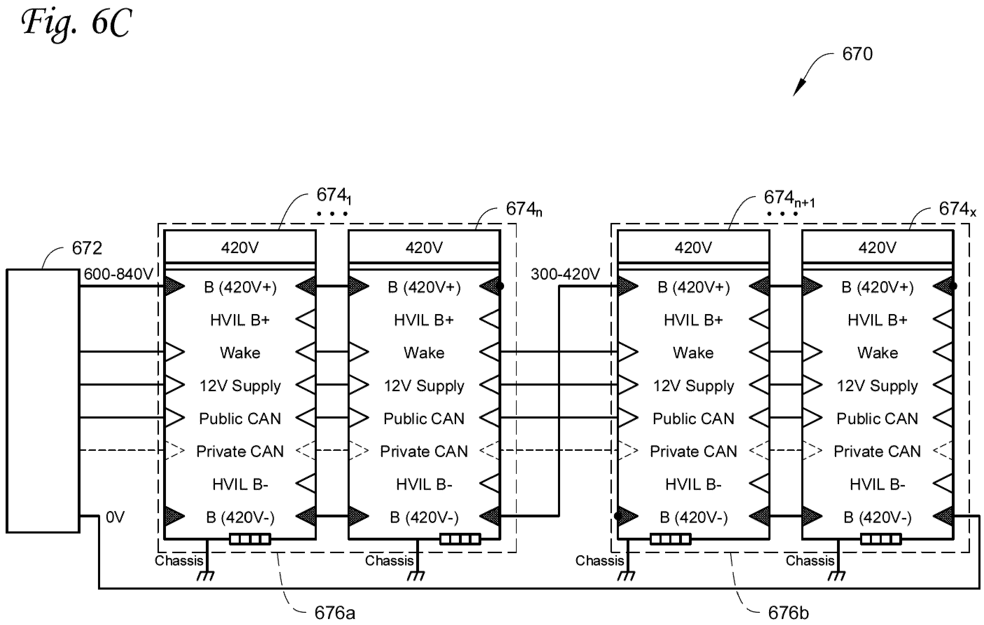

Fig. 6C illustrates an architecture of a battery system according to an embodiment. Battery system 670 includes a load 672 and a plurality of battery modules 674₁₋ₓ configured to supply power to the load 672. Each of the battery modules 674₁₋ₓ can be, as a non-limiting example, a high-voltage battery module such as the battery module 600 as described above and shown in Fig. 6A. In the embodiment shown in Fig. 6C, the plurality of battery modules 674₁₋ₓ can be divided into a plurality of groups 676a,b, each group including at least one battery module. In an embodiment, the number of batteries in each group is equal, for example where first group 676a includes battery modules 1 to n, second group 676b includes battery modules n+1 to n+n. A positive terminal of first battery module 674₁ of the first group 676a can be connected to the load 672. Other battery modules within the first group 676a can be connected to one another in parallel. A negative terminal of final battery module 674ₙ of the first group 676a can be connected to the positive terminal of the first battery module 674ₙ₊₁ of the second group 676b. A negative terminal of the final battery module 674ₓ of the second group 676b can be connected to the load 672. Other battery modules within the second group 676b can be connected to one another in parallel. All other connections of the battery modules 674₁₋ₓ such as battery wake, BMS power supply, public data connections, and/or private data connections can be, for example, daisy chained across battery modules 674₁₋ₓ. When the battery modules 674₁₋ₓ are each 420 V battery modules, the connections shown in Fig. 6C for battery system 670 can provide load 672 with a voltage of 840 V. It is understood that while Fig. 6C includes two groups 676a,b, additional groups can be provided with the positive terminals of the final battery module of each group being connected to the negative terminals of the first battery module of each successive group. The number of groups can be selected based on an overall target voltage to be supplied by the battery modules 674₁₋ₓ and the voltages of each respective module. For example, where each battery module is a 420 V battery module, three groups can be used to provide a voltage of 1260 V, four groups can be used to provide a voltage of 1680 V, and so forth.

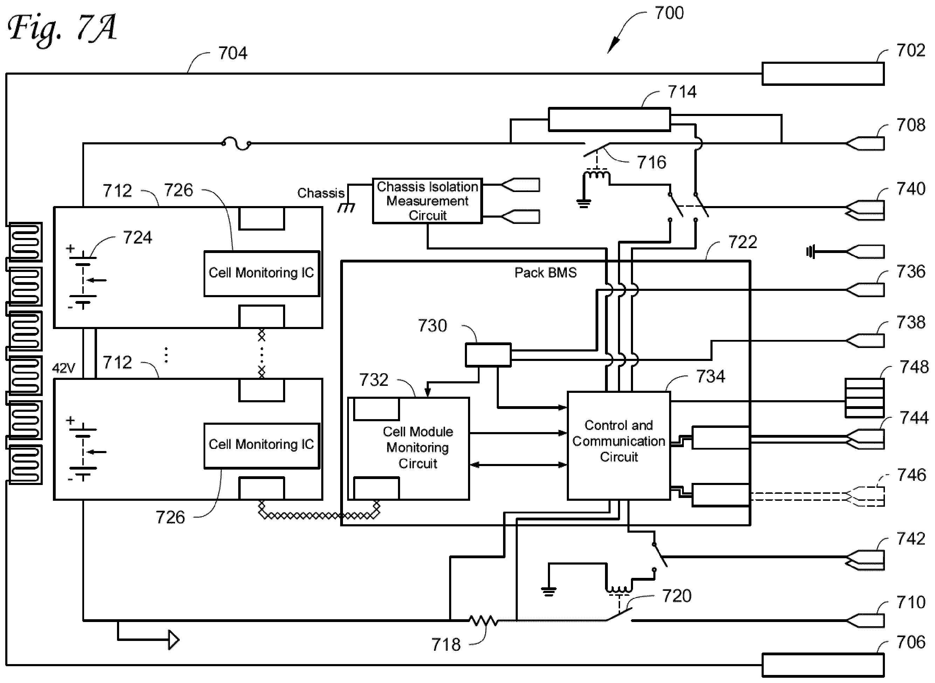

Fig. 7A illustrates a schematic of a battery module according to an embodiment. Battery module 700 includes temperature control fluid inlet 702, temperature control fluid channel 704, and temperature control fluid outlet 706. Battery module 700 further includes a positive terminal 708, a negative terminal 710, and a plurality of cell modules 712. The positive terminal 708 can be connected to one of the cell modules 712 by way of a precharge circuit 714 and a contactor or solid state relay 716. At least one of the cell modules 712 can be connected to the negative terminal 710, with the connection including a current sensor 718 and a second contactor or solid state relay 720. The respective contactors or solid state relays 716, 720 can, in an embodiment, each be part of a high voltage interlock loop (HVIL) including, for example, a ground connection, a breaker, or the like. The battery module 700 further includes a battery management system (BMS) 722.

Battery module 700 is a low-voltage battery module, for example a battery module configured to provide approximately 42 V as a voltage for said battery module. Non-limiting examples of voltages provided by a low-voltage battery module such as the battery module 700 can be in a range from 30 V to 42 V. Battery module 700 can be a battery module configured for use in a trailer or truck, such as battery module 200, 304, 404, or 510 as discussed above and respectively shown in Figs. 2A-2C, 3A-3B, 4, and 5. In a non-limiting embodiment, battery module 700 can be configured to store at or about 10 kilowatt-hours (kW*H) to at or about 13 kW*H of energy.

Battery module 700 can include a temperature control fluid circuit including temperature control fluid inlet 702, temperature control fluid channel 704, and temperature control fluid outlet 706. Temperature control fluid inlet 702 is configured to receive a temperature control fluid, such as a fluid, from a suitable temperature control fluid source such as a battery temperature control system circulating said temperature control fluid. The temperature control fluid channel 704 is a channel configured to convey the temperature control fluid through the battery module. At least a portion of the temperature control fluid channel 704 is configured to allow heat exchange such that the temperature control fluid can absorb heat from one or more components of the battery module 700 thereby cooling said components, with non-limiting examples of components including one or more cells 724 and/or one or more circuits of the BMS 722. The temperature control fluid channel can direct the temperature control fluid to a temperature control fluid outlet 706 where temperature control fluid can exit battery module 700, for example to be returned to the battery temperature control system circulating said temperature control fluid.

Cell modules 712 can be any suitable modules such as the cell modules 218 described above and shown in Fig. 2B and 2C. The cell modules 712 can each include cells 724 and a cell monitoring circuit 726. Cells 724 be any suitable battery cell for use in the cell module 712, with a non-limiting example of a cell 724 being a 10s7p 21600 cell. Cell monitoring circuit 726 can include an integrated circuit configured to measure one or more operational conditions of the battery, such as one or more voltages, currents, state of charge, the presence of a fault, or the like. Cell modules 712 can further include any suitable housings, retention features, and the like, such as the features of cell module 218 as described in detail above and shown in Fig. 2C.

Cell modules 712 can be electrically connected in series and provided in a sufficient number so as to achieve the desired voltage for the battery module 700. For example, when battery module 700 is a 42 V battery module, and each of cell modules 712 is a 42 V cell module, ten cell modules 712 can be provided and connected all in parallel so as to provide the 42 V voltage for the battery module 700. Each cell module can include a respective cell monitoring circuit 728. The cell monitoring circuits 728 can be connected to one another and/or the BMS 722, for example through a daisy-chain connecting the individual cell-monitoring circuits 726 of the various cells.

BMS 722 is configured to control the battery module 700. BMS 722 can include power circuit 730, monitoring circuit 732, and communications circuit 734. Power circuit 730 can receive power and distribute power so as to operate the other components of BMS 722. Monitoring circuit 732 can be connected to cell monitoring circuits 728 and/or otherwise be configured to measure, detect, or receive operational characteristics of the battery module 700 such as voltage, current, temperature, state of charge, presence of faults and the like. BMS 722 can include any further suitable additional connections, such as connections to a BMS power supply 736, battery wake 738, circuit portions connected to high voltage interlock loop (HVIL) B+ and HVIL B- 740, 742. The communication circuit 734 can be connected to private and/or public network connections 744, 746 so as to communicate with private and/or public networks for vehicle components such as, as a non-limiting example, a control area network (CAN) bus. In an embodiment, BMS 722 includes an isolation measurement circuit configured to measure, typically at start-up or awakening of the respective battery module 600, the resistance of battery module 600 with respect to the chassis to which the battery module 200 is attached or otherwise corresponds. The isolation measurement circuit can measure resistance from the positive and negative terminals of the battery to the chassis of the battery itself and of the vehicle chassis to which it is bonded.

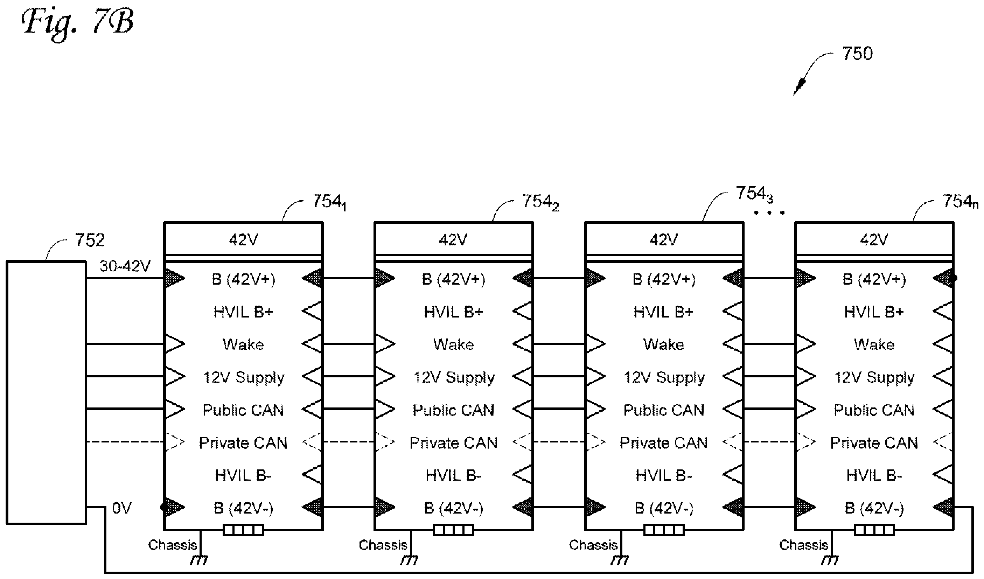

Fig. 7B illustrates an architecture of a battery system according to an embodiment. Battery system 750 includes a load 752 and a plurality of battery modules 754₁₋ₙ configured to supply power to the load 752. Each of the battery modules 754₁₋ₙ can be, as a non-limiting example, a low-voltage battery module such as the battery module 700 as described above and shown in Fig. 7A. The battery modules 754₁₋ₙ are connected to the load such that the positive terminal of a first battery module 754₁ of the plurality is connected to the load 752, a negative terminal of the final battery module 754ₙ of the plurality is connected to the load, and otherwise the battery modules 754₁₋ₙ are connected in parallel with one another. All other connections of the battery modules 754₁₋ₙ such as battery wake, BMS power supply, public data connections, and/or private data connections can be, for example, daisy chained across battery modules 754₁₋ₙ.

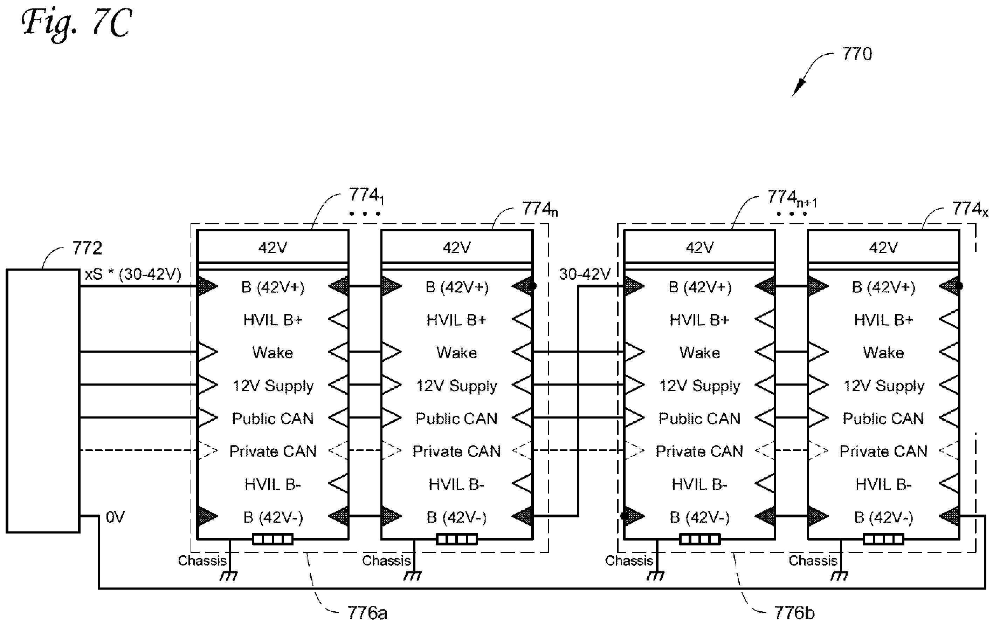

Fig. 7C illustrates an architecture of a battery system according to an embodiment. Battery system 770 includes a load 772 and a plurality of battery modules 774₁₋ₓ configured to supply power to the load 772. Each of the battery modules 774₁₋ₓ can be, as a non-limiting example, a low-voltage battery module such as the battery module 700 as described above and shown in Fig. 7A. In the embodiment shown in Fig. 7C, the plurality of battery modules 774₁₋ₓ can be divided into a plurality of groups 776a,b, each group including at least one battery module. In an embodiment, the number of batteries in each group is equal, for example where first group 776a includes battery modules 1 to n, second group 776b includes battery modules n+1 to n+n. A positive terminal of first battery module 774a of the first group 776a can be connected to the load 772. Other battery modules within the first group 776a can be connected to one another in parallel. A negative terminal of final battery module 774₁ of the first group 776a can be connected to the positive terminal of the first battery module 774ₙ₊₁ of the second group 776b. A negative terminal of the final battery module 774ₓ of the second group 776b can be connected to the load 772. Other battery modules within the second group 776b can be connected to one another in parallel. All other connections of the battery modules 774₁₋ₓ such as battery wake, BMS power supply, public data connections, and/or private data connections can be, for example, daisy chained across battery modules 774₁₋ₓ. When the battery modules 774₁₋ₓ are each 42 V battery modules, the connections shown in Fig. 7C for battery system 770 can provide load 772 with a voltage of 84 V. It is understood that while Fig. 7C includes two groups 776a,b, additional groups can be provided with the positive terminals of the final battery module of each group being connected to the negative terminals of the first battery module of each successive group. The number of groups can be selected based on an overall target voltage to be supplied by the battery modules 774₁₋ₓ and the voltages of each respective module. For example, where each battery module is a 42 V battery module, three groups can be used to provide a voltage of 126 V, four groups can be used to provide a voltage of 168 V, and so forth.

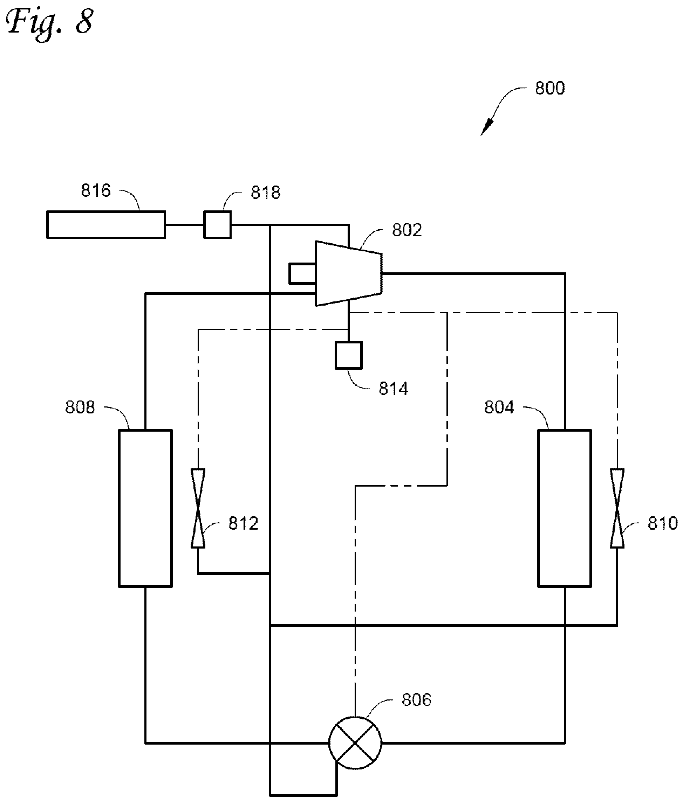

Fig. 8 illustrates a schematic of a transport climate control system according to an embodiment. Transport climate control system 800 includes compressor 802, condenser 804, expander 806, and evaporator 808. Transport climate control system 800 further includes condenser fan(s) 810, evaporator fan(s) 812, and a controller 814. Transport climate control system 800 also includes one or more battery module(s) 816.

Transport climate control system 800 is a system configured to provide climate control to a conditioned space of a transport vehicle, for example a cargo compartment of a trailer or a truck. Transport climate control system 800 can be included, for example, as at least part of CCU 110 of trailer 102 as discussed above and shown in Fig. 1A, CCU 126 of straight truck 120 as discussed above and shown in Fig. 1B. Transport climate control system 800 can optionally include any other suitable components such as heater bars, or the like. In an embodiment, transport climate control system 800 is a multi-zonal system including a plurality of the evaporators 808, evaporator fans 812, and other features such as the optional heater bars.

Compressor 802 can be any suitable compressor for compressing a working fluid of the transport climate control system 800. The compressor 802 can be an electrically powered compressor. Condenser 804 is configured to receive compressed working fluid from the compressor 802 and to allow the exchange of heat so as to condense the working fluid. Working fluid can pass from condenser 804 to expander 806. Expander 806 is configured to expand the working fluid received from condenser 804. In an embodiment, expander 806 is an electronic expansion valve, controllable expander, or other expander that is electrically powered in operation. Working fluid can pass from expander 806 to evaporator 808. Evaporator 808 is a heat exchanger where the working fluid can absorb heat, thereby providing cooling to a space conditioned by the transport climate control system 800. Optionally, transport climate control system 800 can include condenser fan(s) 810 and/or evaporator fan(s) 812. Condenser fans 810 are fans configured to direct airflow over condenser 804 so as to facilitate heat transfer at condenser 804. Condenser fans 810 can be electrically powered fans. Condenser fans 810 can have a controllable speed, for example being controlled by controller 814. Evaporator fans 812 are fans configured to direct airflow over evaporator 810 so as to facilitate heat transfer at evaporator 810 and/or to distribute airflow to the space conditioned by transport climate control system 800. Evaporator fans 812 can be electrically powered fans. Evaporator fans 812 can have a controllable speed, for example being controlled by controller 814.

Controller 814 is a controller configured to control the operations of the transport climate control system 800, including but not limited to operations of the compressor 802, the expander 806, condenser fan(s) 810 and/or evaporator fan(s) 812. Controller 814 can include any one or more suitable processors, memories, and/or other suitable components. Controller 814 can be configured to receive power from battery module(s) 816.

Battery module(s) 816 are configured to supply power to the transport climate control system 800 or components thereof so as to allow operation of transport climate control system 800. Battery module(s) 816 can be any suitable battery modules, with a non-limiting example of a battery module 816 being the battery module 200 as described above and shown in Figs. 2A-2C. Components of transport climate control system 800 that can be powered by the battery module(s) 816 can include, but are not limited to compressor 802, expander 806, condenser fan(s) 810, evaporator fan(s) 812 and/or controller 814. It is understood that any suitable connections and/or components can be provided to allow battery module(s) 816 to provide power to the transport climate control system 800, such as a power module, any suitable inverters, converters, power electronics, and/or other such devices for adjusting, conditioning, or distributing the power from battery module(s) 816. In an embodiment, the battery module(s) 816 can supply power to a power distribution unit (PDU) 818. The PDU 818 can be configured to receive power from one or more inputs including the battery module(s) 816. The one or more inputs can also optionally include one or more of a grid connected AC-DC converter, an electric power take-off (ePTO) from a vehicle battery, an electric-axle generator, an alternator, or the like.

Aspects:

It is understood that any of aspects 1-5 can be combined with any of aspects 6-11 or 12-20. It is understood that any of aspects 6-11 can be combined with any of aspects 12-20.

Aspect 1. A battery module, comprising:
a housing;
a positive terminal;
a negative terminal;
a plurality of cell modules; and
a data connection;
wherein the positive terminal, the negative terminal, and the data connection are all provided on a same side of the housing; and a width of the housing is 30 cm (12 inches which is approximately 30 cm) or less.

Aspect 2. The battery module according to aspect 1, wherein at least 60% of a volume of the housing is formed of a polymer material.

Aspect 3. The battery module according to any of aspects 1-2, wherein a width of the housing is 25 cm (10 inches, which is approximately 25 cm) or less

Aspect 4. The battery module according to any of aspects 1-3, wherein each of the plurality of cell modules includes a cell battery management system connected to the data connection of the battery module.

Aspect 5. The battery module according to any of aspects 1-4, wherein the positive terminal includes at least one of a solid state relay, a transistor, or a contactor and the negative terminal includes at least one of a solid state relay, a transistor, or a contactor.

Aspect 6. A transport climate control system, comprising:
an electrically powered compressor;
a condenser;
an expander;
an evaporator;
one or more fans; and
a plurality of battery modules, each of the plurality of battery modules comprising:
   a housing;
   a positive terminal;
   a negative terminal;
   a plurality of cell modules; and
   a data connection;
   wherein the positive terminal, the negative terminal, and the data connection are all provided on a same side of the housing; and a width of the housing is 30 cm (12 inches, which is approximately 30 cm) or less.

Aspect 7. The transport climate control system according to aspect 6, wherein the plurality of battery modules are configured to provide a voltage to operate at least the electrically powered compressor.

Aspect 8. The transport climate control system according to aspect 7, wherein the electrically powered compressor includes a variable frequency drive.

Aspect 9. The transport climate control system according to any of aspects 7-8, wherein the voltage provided by the plurality of battery modules is up to 420 volts.

Aspect 10. The transport climate control system according to any of aspects 6-9, further comprising a controller, the controller connected to each of the plurality of battery modules by the respective data connection of said battery module.

Aspect 11. The transport climate control system according to aspect 10, wherein the respective data connections of the plurality of battery modules are daisy chained to one another.

Aspect 12. A transport vehicle, comprising:
a cargo compartment;
an electrically powered transport climate control system configured to affect a temperature of the cargo compartment; and
a plurality of battery modules, each of the plurality of battery modules comprising:
   a housing;
   a positive terminal;
   a negative terminal;
   a plurality of cell modules; and
   a data connection;
   wherein the positive terminal, the negative terminal, and the data connection are all provided on a same side of the housing; and a width of the housing is 30 cm (12 inches, which is approximately 30 cm) or less.

Aspect 13. The transport vehicle according to aspect 12, wherein the transport vehicle is a trailer.

Aspect 14. The transport vehicle according to aspect 13, wherein the trailer includes a plurality of cross-beams and each of the plurality battery modules is disposed between a pair of adjacent cross-beams of the plurality of cross-beams.

Aspect 15. The transport vehicle according to aspect 14, wherein each of the one or more battery modules is positioned at least 700 millimeters above ground.

Aspect 16. The transport vehicle according to any of aspects 14-15, further comprising at least one skid plate configured to retain at least one of the plurality of battery modules between respective adjacent cross-beams of the plurality of cross-beams.

Aspect 17. The transport vehicle according to any of aspects 12-16, wherein the transport vehicle is a truck.

Aspect 18. The transport vehicle according to any of aspects 12, 13, or 17, further comprising a rack located beneath a cargo compartment of the truck, wherein at some of the plurality of battery modules are attached to the rack.

Aspect 19. The transport vehicle according to any of aspects 12, 13, or 17, further comprising a rack located on a wall of a cargo compartment, wherein at least some of the plurality of battery modules are attached to the rack.

Aspect 20. The transport vehicle according to any of aspects 12-19, wherein the plurality of battery modules are configured to provide a voltage to operate the electrically powered transport climate control system.

The examples disclosed in this application are to be considered in all respects as illustrative and not limitative. The scope of the invention is indicated by the appended claims rather than by the foregoing description; and all changes which come within the meaning and range of equivalency of the claims are intended to be embraced therein.

## Claims

1. A battery module, comprising:
a housing;
a positive terminal;
a negative terminal;
a plurality of cell modules; and
a data connection;
wherein the positive terminal, the negative terminal, and the data connection are all provided on a same side of the housing; and a width of the housing is 30 centimeters or less.

2. The battery module of claim 1, wherein at least 60% of a volume of the housing is formed of a polymer material, and/or
wherein a width of the housing is 25 centimeters or less.

3. The battery module of any one of claims 1 and 2, wherein each of the plurality of cell modules includes a cell battery management system connected to the data connection of the battery module.

4. The battery module of any one of claims 1-3, wherein the positive terminal includes at least one of a solid state relay, a transistor, or a contactor and the negative terminal includes at least one of a solid state relay, a transistor, or a contactor.

5. A transport climate control system, comprising:
an electrically powered compressor;
a condenser;
an expander;
an evaporator;
one or more fans; and
a plurality of battery modules as claimed in any preceding claim.

6. The transport climate control system of claim 5, wherein the plurality of battery modules are configured to provide a voltage to operate at least the electrically powered compressor, and optionally
wherein the electrically powered compressor includes a variable frequency drive.

7. The transport climate control system of any one of claims 5 and 6, wherein the voltage provided by the plurality of battery modules is up to 420 volts.

8. The transport climate control system of any one of claims 5-7, further comprising a controller, the controller connected to each of the plurality of battery modules by the respective data connection of said battery module.

9. The transport climate control system of claim 8, wherein the respective data connections of the plurality of battery modules are daisy chained to one another.

10. A transport vehicle, comprising:
a cargo compartment;
a transport climate control system as claimed in any of claims 5 to 9.

11. The transport vehicle of claim 10, wherein the transport vehicle is a trailer,
wherein the trailer includes a plurality of cross-beams and each of the plurality battery modules is disposed between a pair of adjacent cross-beams of the plurality of cross-beams, and optionally
further comprising at least one skid plate configured to retain at least one of the plurality of battery modules between respective adjacent cross-beams of the plurality of cross-beams.

12. The transport vehicle of any one of claims 10 and 11, wherein each of the one or more battery modules is positioned at least 700 millimeters above ground.

13. The transport vehicle of any one of claims 10 and 12, wherein the transport vehicle is a truck, and optionally
further comprising a rack located beneath a cargo compartment of the truck, wherein at some of the plurality of battery modules are attached to the rack.

14. The transport vehicle of any one of claims 10-13, further comprising a rack located on a wall of a cargo compartment, wherein at least some of the plurality of battery modules are attached to the rack.

15. The transport vehicle of any one of claims 10-14, wherein the plurality of battery modules are configured to provide a voltage to operate the electrically powered transport climate control system.
